# EUROPÄISCHE PATENTANMELDUNG

(11) **EP 2 672 162 A1**
(43) Veröffentlichungstag der Anmeldung: **11.12.2013**
(21) Anmeldenummer: 12171237.6
(22) Anmeldetag: 08.06.2012
(51) Int. Cl.: F16L 47/02

(54) **Gerillte Elektroschweissmuffe**

(71) Anmelder: Georg Fischer Wavin AG, 8201 Schaffhausen (CH)
(72) Erfinder: Petry, Dirk, 8245 Feuerthalen (CH); Rösch, Jürgen, 79853 Lenzkirch (DE); Lübke, Bastian, 8203 Schaffhausen (CH); Pesic, Kresimir, 8212 Neuhausen am Rheinfall (CH)
(74) Vertreter: De Colle, Piergiacomo

(57) **Zusammenfassung**

Elektroschweissmuffe (1) mit einem zylindrischen Muffenkörper (2) zum Verschweissen von Rohren aus thermoplastischem Kunststoff oder anderen schweissbaren Kunststoffen, enthaltend mindesten zwei Heizzonen (3) mit jeweils mehreren elektrisch leitenden Windungen und Kontakten zur Zuführung des elektrischen Stroms, wobei entlang der Aussenfläche des zylindrischen Muffenkörpers mindestens eine längs verlaufende Rille (4) angeordnet ist.

## Beschreibung

Die Erfindung betrifft eine Elektroschweissmuffe mit einem zylindrischen Muffenkörper zum Verschweissen von Rohren aus thermoplastischem Kunststoff oder anderen schweissbaren Kunststoffen, enthaltend mindestens zwei Heizzonen mit jeweils mehreren elektrisch leitenden Windungen und Kontakten zur Zuführung des elektrischen Stroms.

Hauptsächlich in den letzten Jahren wurden aus Gewichts- und Korrosionsgründen im Rohrleitungsbau vermehrt Rohrleitungen aus thermoplastischen Kunststoffen verwendet, im Speziellen für den Bau von Rohrleitungsnetzen für die Gas- und Wasserversorgung, sowie zum Fördern von Luft, Abwasser oder auch Chemikalien. Die eingesetzten Rohrleitungen sind meist aus druckfestem Kunststoff. Zur Verbindung solcher Rohrleitungen werden oft aus Qualitäts-und Effizienzgründen Elektroschweissmuffen verwendet. Je grösser der Leitungsdurchmesser der zu verbindenden Rohrleitungen, desto mehr Aufwand bedarf es zur Verbindung der einzelnen Rohrleitungskomponenten. Da bei grossen Leitungsquerschnitten der Spalt zwischen Rohrleitung und Elektroschweissmuffe verhältnismässig gross ist, sind die Voraussetzungen für eine optimale Verschweissung nicht gegeben.

Bei engen Fertigungstoleranzen, bei welchen eine geringe Spaltenbildung zwischen Rohraussendurchmesser und Muffeninnendurchmesser erreicht wird, besteht das Problem des Einführens des Rohres in die Elektroschweissmuffe. Je grösser der Durchmesser der Rohrleitung ist, je mehr neigen die Rohre zur Ovalität und können dadurch nicht in die Muffe eingeführt werden. Neben dem Spalt bzw. der Ovalität der Rohre besteht das weitere Problem der Lunkernbildung in der Schweisszone. Beim Verschweissen von Elektroschweissmuffen, im Speziellen bei grossen Durchmessern treten nach dem Abkühlen in der Schweisszone Lunker auf, welche unter Umständen die Festigkeit der Schweissverbindung negativ beeinflussen können. Lunker bilden sich durch das Volumenschwinden der Schmelze während des Erstarrens des Kunststoffs oder auch durch die unregelmässige Ausdehnung der Schmelze indem sich Randstellen zuerst mit dem zu verschweissenden Rohr verbinden und dadurch die eingeschlossene Luft dazwischen keine Möglichkeit mehr hat zu entweichen.

Aus dem Stand der Technik sind Elektroschweissmuffen bekannt, die das Problem der Lunkernbildung durch die Ausübung eines hohen Drucks auf die Schweissung zu unterdrücken versuchen.

Die EP 0 222 287 B1 offenbart eine Schweissmuffe, welche eine Armierung aufweist, die vorzugsweise aus Metall ist und dadurch einen geringeren Wärmeausdehnungskoeffizienten besitzt als der Muffenkörper aus Kunststoff. Durch die geringere Ausdehnung der Armierung wird ein Druck erzeugt, der eine gute Schweissung ermöglicht.

Nachtteilig hierbei ist, dass sich bei tiefen Umgebungstemperaturen der Armierungsring aufgrund des niedrigen Ausdehnungskoeffizienten weniger zusammenzieht als der Muffenkörper aus Kunststoff. Dadurch löst sich der Armierungsring vom Muffenkörper und verliert die Armierungsfunktion, wodurch kein zusätzlicher Schweissdruck aufgebaut wird.

Die EP 0 555 684 A1 offenbart eine Schweissmuffe, welche einen am Aussenumfang des Muffenkörpers angeordneten Verstärkungsring aufweist. Die durch den Verstärkungsring ausgelösten Umfangsspannungen, erzeugen den radial auf den Muffenkörper wirkenden Druck, welcher für eine gute Schweissung erforderlich ist. Der Verstärkungsring übt auch während des Abkühlvorgangs der Muffe nach dem Schweissen weiter Druck auf den Muffenkörper aus.

Nachteilig an dieser sowie der voran erwähnten Erfindung ist die komplexe Fertigungstechnik wie auch die hohen Kosten. Zudem kommt es vor, dass durch den aufgebrachten Druck, sich die Abstände der Windungen unkontrolliert in axialer Richtung verschieben und es kann zu Drahtaustritt führen.

Die EP 2 132 024 B1 offenbart Ausgleichselemente, welche durch ihre konische Bauform den Spalt zwischen Rohr und Muffe ausgleichen sollen. Die Ausgleichselemente weisen ausgehend von den Stirnseiten Schlitze auf, welche dem Ausgleichselements die Flexibilität verleihen.

Nachteilig ist daran, dass für eine solche Verbindung zwei Ausgleichelemente mit je zwei Schweisszonen und eine Muffe, die den Druck auf die Schweissung ausübt, benötigt werden. Vor allem bei grossen Durchmessern entstehen hohe Materialkosten wie auch ein hoher Montageaufwand.

Es ist Aufgabe der Erfindung eine Elektroschweissmuffe vorzuschlagen, welche durch eine hohe Flexibilität des Muffenkörpers die Lunkernbildung vermeidet, indem die Ringsteifigkeit auf ein Minimum reduziert wird.

Diese Aufgabe wird erfindungsgemäss dadurch gelöst, dass entlang der Aussenfläche des zylindrischen Muffenkörpers mindestens eine längs verlaufende Rille angeordnet ist.

Durch die Rille wird erreicht, dass die Ringsteifigkeit des Muffenkörpers geschwächt wird. Deshalb dehnt sich der Muffenkörper während des Schweissprozesses mehr als die bisherigen aus dem Stand der Technik bekannten Muffenkörper. Er zieht sich jedoch während des Abkühlvorgangs auch wieder dementsprechend mehr zusammen. Der Muffenkörper zieht sich so stark zusammen, dass er nach dem Verschweissen mindestens im Bereich der Schweisszoneeinen geringeren Aussendurchmesser als vor dem Einbau aufweist.

Durch die erfindungsgemässe Elektroschweissmuffe ist der Schweissvorgang ein physikalisch unterschiedlicher Prozess im Vergleich zum Schweissvorgang bei Elektroschweissmuffen, die aus dem Stand der Technik bekannt sind. Bei bekannten Schweissvorgängen wird durch eine Erhöhung des Drucks auf den Muffenkörper, meist durch Armierungen, versucht die Lunkernbildung während des Abkühlvorgangs zu unterdrücken bzw. die Volumenschwindung des aus der Schmelze erstarrenden Kunststoffs und die dadurch entstehenden Lunkern zusammen zu pressen. Hingegen mit der erfindungsgemässen Elektroschweissmuffe wird durch die hohe Flexibilität der Muffe das Bilden von Lunkern während des Abkühlvorgangs vermieden. Der Muffenkörper dehnt sich während der Schweissung aber zieht sich wie bereits zuvor erwähnt auch wieder dementsprechend zusammen. Da das Volumenschwinden des Kunststoffs durch das Mitgehen der Muffe keine Lunkern entstehen lässt, wird kein hoher Druck benötigt um die Lunkernbildung zu unterdrücken bzw. massgeblich zu reduzieren.

Zudem bringt die erfindungsgemässe Elektroschweissmuffe durch ihre Flexibilität den Vorteil mit sich, dass sie sich problemlos über ovale Rohrquerschnitte schieben lässt, da sie bei der Montage in die entsprechend Form gedrückt werden kann. Das hat wiederum den Vorteil, dass der Spalt gering ist, da der Muffeninnendurchmesser nicht viel grösser sein muss als der Rohraussendurchmesser. Durch das Zurechtdrücken der Muffe ist das Einschieben eines ovalen Rohres problemlos möglich. Hingegen bei einer starren Muffe muss der Innendurchmesser entsprechend gross sein um ein ovales Rohr einführen zu können, wodurch ein grosser Spalt zwischen Rohraussendurchmesser und Muffeninnendurchmesser entsteht, was für eine gute Schweissung keine ideale Voraussetzung ist.

Bisher lag die Vermutung nahe, dass durch die Rillung der Muffenkörper geschwächt würde und somit nicht die notwendige Innendruckfestigkeit erreichen würde. Da jedoch die Rohre, welche miteinander zu verbinden sind, eingeschweisst sind, übernehmen diese die Kraftaufnahme in Umfangsrichtung. In Längsrichtung spielt die Schwächung der Muffe nur eine untergeordnete Rolle und kann wenn nötig durch eine geringe Erhöhung der Wanddicke ausgeglichen werden. Eine Rille kann durch mechanische Nachbearbeitung des Muffenkörpers bspw. durch Fräsen eingebracht werden. Jedoch kann die Rille bzw. Rillen auch schon während des Spritzgiessprozesses oder Extrusionprozesses in den Muffenkörper vorgesehen werden, indem entsprechende Formen des Muffenkörpers, welche ein Negativ einer Rille bzw. Rillen aufweisen, eingesetzt werden.

Vorteilhaft ist es, wenn der Muffenkörper mehrere Rillen aufweist. Die Anzahl der Rillen an einem Muffenkörper kann zwischen vier und 72 betragen. Die Rillenanzahl ist abhängig von der Dimension des Muffenkörpers. Das heisst, dass der Durchmesser zur Bestimmung der Anzahl der Rillen, welche am Umfang angeordnet sind eine Rolle spielt wie auch die Wanddicke des Muffenkörpers. Vorzugsweise weisen die Muffen 16 bzw. 32 Rillen auf, je nach Dimension des Durchmessers.

Die längs verlaufenden Rillen sind vorzugsweise gleichmässig entlang des Umfangs verteilt, dadurch entsteht eine gleichmässiges Ausdehnen wie auch ein anschliessend gleichmässiges Zusammenziehen.

Eine Rille erstreckt sich vorzugsweise über die gesamte Länge des Muffenkörpers. Alternativ dazu kann eine Rille sich über einen bestimmten Abschnitt der Länge des Muffenkörpers erstrecken. Ausgehend von einer Stirnseite erstreckt sich die Rille in Richtung Mitte des Muffenkörpers. Die Länge des Abschnitts über den sich die Rille erstreckt ist abhängig von der Dimension der Elektroschweissmuffe bzw. des Muffenkörpers. Vorzugsweise erstreckt sich der Abschnitts der Rille über die Mitte der näherliegenden Heizzone hinaus.

Eine weitere Ausgestaltung der Erfindung besteht darin, dass sich die Rillen über die Mitte des Muffenkörpers hinaus erstrecken, jedoch nicht über die komplette Länge des Muffenkörpers ragen.

Vorzugsweise laufen die Rillen, welche sich von der Stirnseite her über einen Abschnitt der Länge des Muffenkörpers hin erstrecken, in einem Radius aus.

Es hat sich als vorteilhaft erwiesen, dass Rillen, welche sich über einen gewissen Abschnitt erstrecken, von beiden Stirnseiten her in Richtung Mitte des Muffenkörpers hin verlaufen.

Rillen die sich von den beiden Stirnseiten hin Richtung Mitte erstrecken, sind vorzugsweise miteinander fluchtend bzw. die Abschnitte liegen auf ihrer Verlängerung.

Alternativ dazu besteht die Möglichkeit, dass sich die Abschnitte der Rillen, welche sich von beiden Stirnseiten in Richtung Mitte der Muffe hin erstrecken und unter Umständen über die Mitte hinaus gehen, nicht miteinander fluchten. Das heisst, dass sie am Umfang versetzt zueinander verlaufen.

Es hat sich gezeigt, dass es Vorteilhaft ist, wenn eine Rille eine Tiefe aufweist, die im Bereich von 50 - 90% der Wanddicke liegt. Jedoch ist die Tiefe einer Rille abhängig von der Dimension der Elektroschweissmuffe, wie auch der Wanddicke. Die Rille sollte die Tiefe von 95% der Wanddicke nicht überschreiten, da der Muffenkörper ansonsten zu schwach werden würde. Unterschiedliche Festigkeitsstufen von Muffenkörpern lassen sich durch die Erzeugung einer anderen Tiefe der Rillen am jeweiligen Muffenkörper einfach umsetzen.

Es besteht die Möglichkeit um die Elektroschweissmuffe einen Armierungsring anzuordnen, welcher die Festigkeit der Muffe optimiert. Wobei der Ring aus mindestens zwei miteinander zu verbindenden Schalenteilen gebildet werden kann, die gegenseitig bzw. miteinander verspannt werden um eine zusätzlich Festigkeit zu erzeugen.

Ausführungsbeispiele der Erfindung wird anhand der Figuren beschrieben, wobei sich die Erfindung nicht nur auf die Ausführungsbeispiele beschränkt. Es zeigen:
- Fig. 1: einen Längsschnitt durch eine erfindungsgemässe Elektroschweissmuffe bei welcher sich die Rillen über die gesamte Länge des Muffenkörpers erstrecken,
- Fig. 2: eine perspektivische Ansicht einer erfindungsgemässen Elektroschweissmuffe, bei welcher sich die Rillen über die gesamte Länge des Muffenkörpers erstrecken,
- Fig. 3: einen Längsschnitt durch eine erfindungsgemässe Elektroschweissmuffe, bei welcher sich die Rillen über einen bestimmten Abschnitt von den Stirnflächen in Richtung Mitte des Muffenkörpers hin erstrecken,
- Fig. 4: eine perspektivische Ansicht einer erfindungsgemässen Elektroschweissmuffe, bei welcher sich die Rillen fluchtend über einen bestimmten Abschnitt von den Stirnseiten in Richtung Mitte des Muffenkörpers hin erstrecken,
- Fig. 5: eine perspektivische Ansicht einer erfindungsgemässen Elektroschweissmuffe, bei welcher sich die Rillen nicht fluchtend über einen bestimmten Abschnitt von den Stirnseiten in Richtung Mitte des Muffenkörpers hin erstrecken,
- Fig.6: einen Längsschnitt einer erfindungsgemässen Elektroschweissmuffe mit einem Verstärkungsring und
- Fig. 7: einen Längsschnitt einer erfindungsgemässen Elektroschweissmuffe, bei welcher sie Rillen im Spritzgeissverfahren miteingebracht wurden.

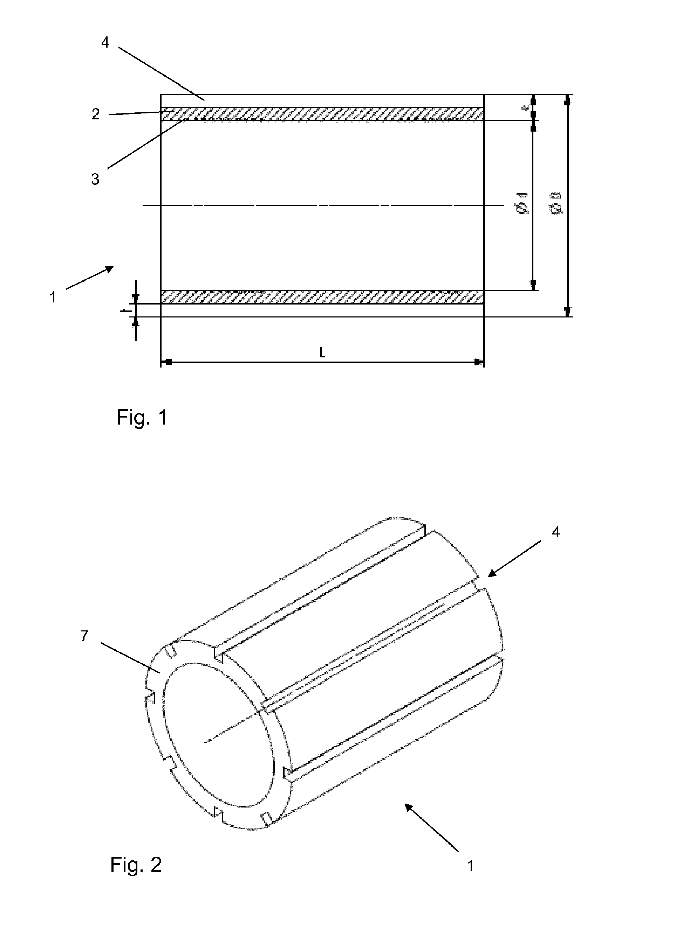

Fig. 1 zeigt eine Elektroschweissmuffe 1 zum Verbinden von Kunststoffrohrleitungen. Der Muffenkörper 2 ist aus schweissbarem Kunststoff hergestellt, vorzugsweise aus einem thermoplastischen Kunststoff. Die Elektroschweissmuffe 1 weist mindestens zwei Heizzonen 3 auf, die über Kontakte 6 an den elektrischen Strom angeschlossen werden um die Heizzonen 3 zur Verschweissung der Rohre mit der Elektroschweissmuffe 1 aufzuheizen.

Die in Fig. 1 abgebildete Elektroschweissmuffe 1 weist Rillen 4 auf, welche sich über die komplette Länge L des Muffenkörpers 2 hin erstrecken. Durch die Rillen 4 wird die Ringsteifigkeit der Elektroschweissmuffe 1 bewusst geschwächt, wodurch sich die Muffe 1 während des Verschweissens mit dem Volumen des zu verschweissenden Kunststoffs ausdehnet. Während des Abkühlens der Schweissung verringert sich das Volumen des Kunststoffs der Schweissnaht. Durch die Flexibilität des Muffenkörpers 2, durch die eingearbeiteten Rillen 4, verringert sich die Dimension bzw. der Durchmesser des Muffenkörpers 2 ebenfalls. Dadurch kann die Bildung von Lunkern vermieden werden, da keine Hohlräume durch Volumenschwindung entstehen können, wie das bei Elektroschweissmuffen aus dem Stand der Technik bekannt ist. Bei der vorliegenden Erfindung zieht sich der Muffenkörper 2 beim Abkühlen ebenso zusammen wie er sich zuvor beim Erwärmen ausgedehnt hat. Durch die Volumenschwindung zieht sich der Muffenkörper 2 auf einen Durchmesser d, D zusammen, der in der Regel kleiner ist als der, der noch nicht eingebauten bzw. eingeschweissten Elektroschweissmuffe 1. In diesem Fall verringert sich die Breite der Rille 4.

Die Anzahl der Rillen 4, welche über den Umfang des Muffenkörpers 2 verteilt sind, ist abhängig von der Dimension der Muffe 1, das heisst vom Innen- bzw. Aussendurchmesser d, D und der Wanddicke e. Vorzugsweise liegt die Anzahl der Rillen 4 zwischen vier und 72, die am Umfang verteilt sind. Es hat sich gezeigt dass Elektroschweissmuffen 1 mit einer Anzahl von Rillen 4 zwischen 16 und 32 sich am besten eignen.

Die Tiefe t der Rillen 4 ist ebenfalls abhängig von der Dimension bzw. den Durchmessern d, D in Abhängigkeit der Wanddicke e der Elektroschweissmuffe 1. Vorzugsweise liegt die Tiefe t im Bereich von 50-90% der Wanddicke e.

Jedoch sollte die Rille 4 die Tiefe von 95% der Wanddicke e nicht überschreiten.

Fig. 2 zeigt eine erfindungsgemässe Elektroschweissmuffe 1 die acht Rillen 4 über die komplette Länge L des Muffenkörpers 2 aufweist. Vorzugsweise sind die Rillen 4 regelmässig entlang des Umfangs angeordnet. Durch die regelmässige Anordnung, sind ein gleichmässiges Ausdehnen und ein gleichmässiges Zusammenziehen des Muffenkörpers gewährleistet.

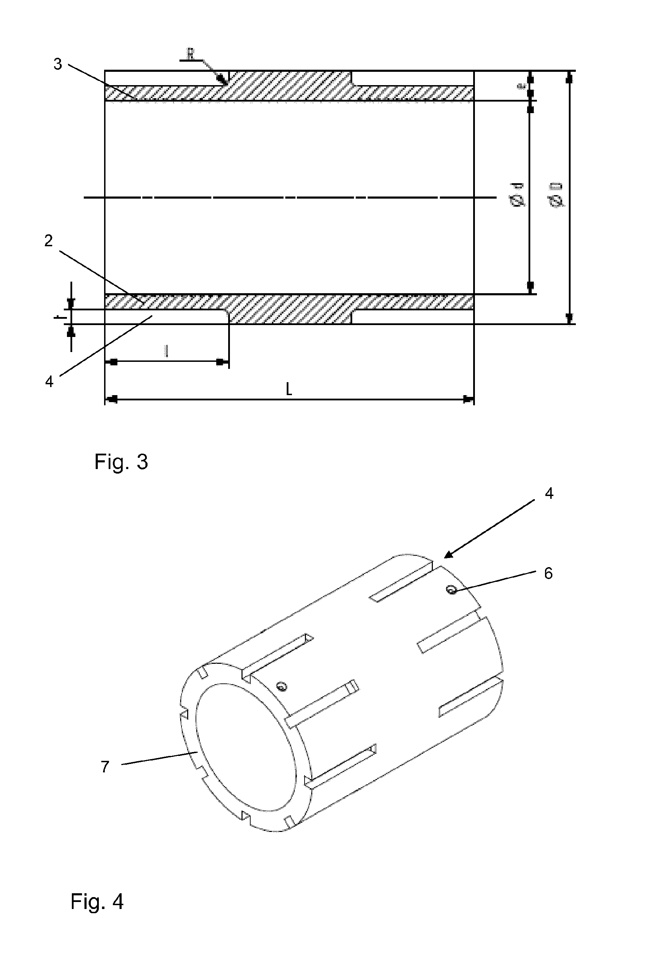

Fig. 3 zeigt eine Elektroschweissmuffe 1, bei welcher sich die Rillen 4 jeweils von der Stirnseite 7 in Richtung Mitte hin erstrecken. Die Rillen 4 erstrecken sich über einen Abschnitt I, welcher eine Länge aufweist, die abhängig von der Dimension der Elektroschweissmuffe 1 ist. Vorzugsweise erstreckt sich der Abschnitt I über die Mitte der jeweiligen Heizzone 3, welche sich auf derselben Seite des Muffenkörpers befindet von der aus sich die Rillen erstrecken bzw. über die Mitte der näherliegenden Heizzone 3.

Zur Vermeidung von Spannungsspitzen bzw. folgenden Spannungsrissen befindet sich am Abschnittsende der Abschnitte I der Rillen 4 jeweils ein Radius R. Der Radius R dient dem Auslauf der Rillen 4 und ist von Vorteil gross ausgeführt.

Die Abschnitte I, welche sich von beiden Stirnseiten 7 her in Richtung Mitte des Muffenkörpers 2 hin erstrecken, sind vorzugsweise fluchtend und liegen dadurch in ihrer eigenen Verlängerung, wie in Fig. 4 gezeigt.

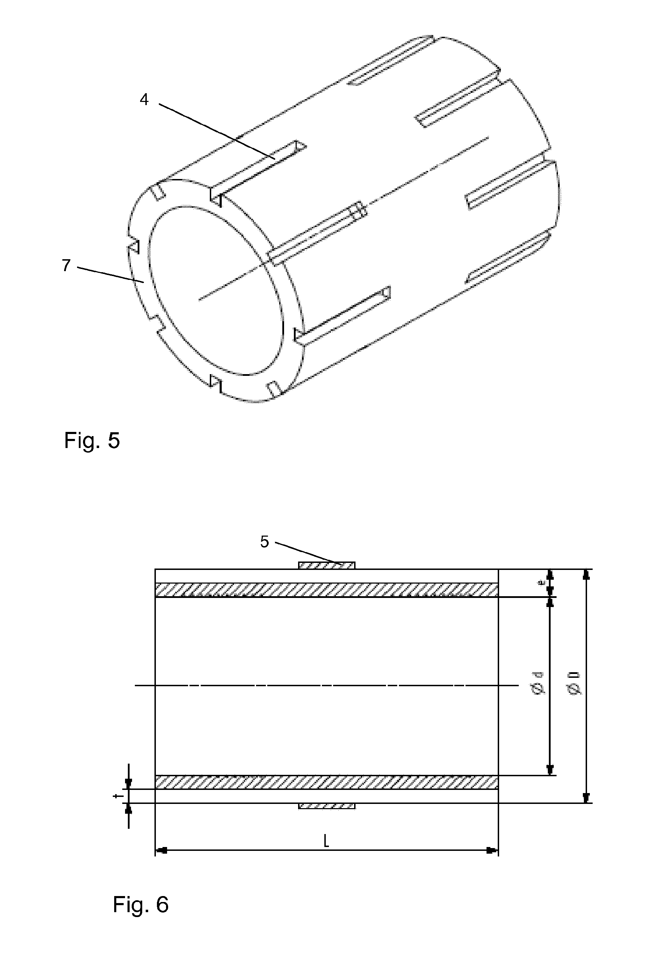

Eine weitere mögliche Ausführungsform einer erfindungsgemässen Elektroschweissmuffe 1 wird in Fig. 5 gezeigt, bei welcher die Rillen 4 bzw. die Abschnitte I versetzt angeordnet sind, so dass sie nicht ineinander fluchten. Alternativ können die Rillen 4 auch über die Mitte des Muffenkörpers 2 hinausragen, hier nicht dargestellt.

Fig. 6 zeigt eine erfindungsgemässe Elektroschweissmuffe 1 bei der als Verstärkung ein Armierungsring 5 angebracht ist um nach dem Verschweissen der Rohre die Festigkeit zu erhöhen. Der Armierungsring 5 wird vorzugsweise aus zwei Schalenteilen gebildet, welche miteinander verspannt werden, denkbar sind jedoch auch mehr als zwei Schalenteile oder ein einteiliger Ring. Der Ring 5 bzw. die Schaltenteile zur Bildung des Armierungsringes 5 können aus demselben Material wie der Muffenkörper 2 oder auch aus anderen Materialien hergestellt sein z. B. aus Kunststoff oder Metall.

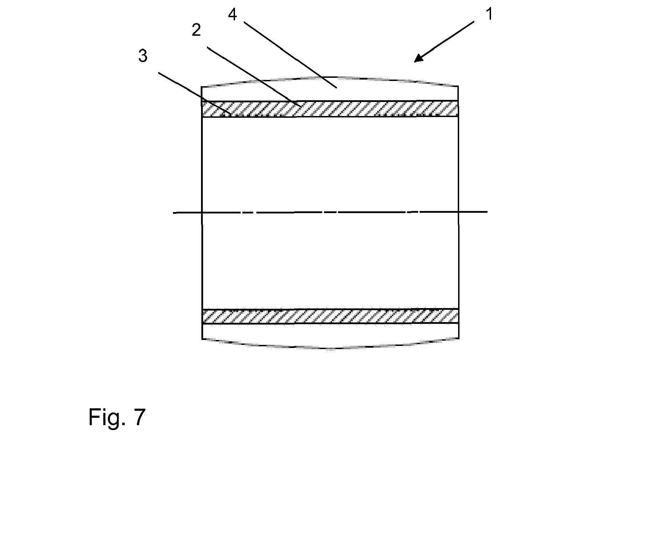

In Fig. 7 ist eine erfindungsgemässe Elektroschweissmuffe 1 abgebildet, die durch Spritzgiessen hergestellt wurde. Das heisst, dass die Rillen 4 ebenfalls während des Spritzgiessprozesses durch eine entsprechende Form eingebracht wurden und sich eine Nacharbeit bezüglich Einfräsen der Rillen 4 dadurch erübrigt. Aufgrund des Herstellverfahrens weist die Muffe 1 keine zylindrische Aussenform auf sondern ist leicht konvex bzw. weist eine bombierte Form auf.

### Bezugszeichenliste

- 1: Elektroschweissmuff
- 2: Muffenkörper
- 3: Heizzone
- 4: Rille
- 5: Armierungsring
- 6: Kontakte
- 7: Stirnseite

- t =: Tiefe der Rille
- l =: Abschnitt / Länge des Abschnitts
- L=: Länge des Muffenkörpers
- e =: Wanddicke
- d =: Innendurchmesser Elektroschweissmuffe
- D =: Aussendurchmesser Elektroschweissmuffe

## Patentansprüche

1. Elektroschweissmuffe (1) mit einem zylindrischen Muffenkörper (2) zum Verschweissen von Rohren aus thermoplastischem Kunststoff oder anderen schweissbaren Kunststoffen, enthaltend mindesten zwei Heizzonen (3) mit jeweils mehreren elektrisch leitenden Windungen und Kontakten (6) zur Zuführung des elektrischen Stroms, **dadurch gekennzeichnet, dass** entlang der Aussenfläche des zylindrischen Muffenkörpers mindestens eine längs verlaufende Rille (4) angeordnet ist.

2. Elektroschweissmuffe (1) nach Anspruch 1, **dadurch gekennzeichnet, dass** der Muffenkörper (2) mindestens vier Rillen (4) aufweist.

3. Elektroschweissmuffe (1) nach Anspruch 1 oder 2, **dadurch gekennzeichnet, dass** die Rillen (4) gleichmässig entlang des Umfangs angeordnet sind.

4. Elektroschweissmuffe (1) nach einem der Ansprüche 1 bis 3, **dadurch gekennzeichnet, dass** die Rille (4) sich über die gesamte Länge (L) des Muffenkörpers (2) erstreckt.

5. Elektroschweissmuffe (1) nach einem der Ansprüche 1 bis 3 **dadurch gekennzeichnet, dass** sich die Rille (4) von der Stirnseite (7) in Richtung Mitte des Muffenkörpers (2) hin über einen Abschnitt (I) des Muffenkörpers (2) erstreckt.

6. Elektroschweissmuffe (1) nach Anspruch 5, **dadurch gekennzeichnet, dass** der Abschnitt (I) der Rille (4) sich über die Mitte der näherliegenden Heizzone (3), hin erstreckt.

7. Elektroschweissmuffe (1) nach Anspruch 5, **dadurch gekennzeichnet, dass** der Abschnitt (I) der Rille (4) sich über die Mitte des Muffenkörpers hin erstrecken.

8. Elektroschweissmuffe (1) nach einem der vorangehenden Ansprüche,
**dadurch gekennzeichnet, dass** die Rillen (4) sich von beiden Stirnseiten (7) des Muffenkörpers (2) in Richtung Mitte hin erstrecken.

9. Elektroschweissmuffe (1) nach Anspruch 8, **dadurch gekennzeichnet, dass** die Rillen (4), welche sich von beiden Stirnseiten (7) Richtung Mitte hin erstrecken, fluchtend zueinander sind.

10. Elektroschweissmuffe (1) nach Anspruch 7, **dadurch gekennzeichnet, dass** die Rillen (4), welche sich von beiden Stirnseiten (7) Richtung Mitte hin erstrecken, versetzt zueinander sind.

11. Elektroschweissmuffe (1) nach einem der Ansprüche 1 bis 9, **dadurch gekennzeichnet, dass** die Rille eine maximale Tiefe (t) von 95% der Wanddicke e aufweist, vorzugsweise jedoch eine Tiefe (t) von 50 - 90% der Wanddicke (e) aufweist.

12. Elektroschweissmuffe (1) nach einem der Ansprüche 1 bis 11, **dadurch gekennzeichnet, dass** am Muffenkörper (2) ein Armierungsring (5) angeordnet ist.

13. Elektroschweissmuffe (1) nach Anspruch 12, **dadurch gekennzeichnet, dass** der Armierungsring (5) durch mindestens zwei Schalenteile gebildet ist.
